# EUROPEAN PATENT SPECIFICATION

(11) **EP 2 317 877 B1**
(45) Date of publication and mention of the grant of the patent: **04.01.2012**
(21) Application number: 09788245.0
(22) Date of filing: 23.07.2009
(51) Int. Cl.: A23L 1/305, A23J 1/20, A23C 9/142

(54) **METHOD FOR FILTERING MILK**
VERFAHREN ZUM FILTRIEREN VON MILCH
PROCÉDÉ DE FILTRATION DU LAIT

(30) Priority: 23.07.2008 WO PCT/NL2008/050504
(43) Date of publication of application: 11.05.2011
(73) Proprietor: N.V. Nutricia, 2712 HM Zoetermeer (NL)
(72) Inventor: Huisman, Ingmar Harald, NL-2627 AD Delft (NL)
(74) Representative: van Westenbrugge, Andries
(86) International application number: PCT/NL2009/050456
(87) International publication number: WO 2010/011142

(56) References cited:
- EP-A- 0 467 482
- WO-A-00/51440
- US-A- 4 018 752
- US-A- 6 139 901

## Description

### FIELD OF THE INVENTION

The present invention relates to industrial scale processes for increasing protein concentration in milk, particularly increasing protein concentration and reducing the mineral content in milk.

### BACKGROUND OF THE INVENTION

For preparing nutritional compositions, milk proteins are preferably used in the form of concentrated milk protein. The concentrated milk proteins are typically produced using ultrafiltration processes. The quality of the concentrated milk protein is preferably improved by reducing the phosphorus and/or calcium content. High phosphorus in food for vulnerable people can cause problems, for example renal problems or bone health problems. In industrial scale processes it is important that the permeation fluxes are maintained at a high level to ensure a sufficient productivity. Hence, fouling of the ultrafiltration membrane is particularly undesirable.

EP 0467482 describes a method of preparing a milk protein isolate by ultrafiltration of a milk derivative containing dissolved milk proteins, comprising ultrafiltration of a non-preheated or at most low pasteurized skim milk or mixture of skim milk and a whey containing solution at a pH ranging from 3 to 4, followed by diafiltration of the retentate, then increasing the pH to a value substantially within the neutral range, at which pH ultrafiltration is continued until a solids content in the retentate of at least 15% and in particular about 20%.

St-Gelais et al., J. Dairy Sci. 75, 1167-1172 (1992) describes combined effects of temperature, acidification, and diafiltration on the composition of skim milk retentate and permeate in an ultrafiltration process.

WO 00/51440 describes a process for creating an approximately neutral fluid milk composition, including milk protein concentrate and milk plus added whey, by selecting an alkali, adjusting the pH upward, heating, cooling, selecting an acid, and adjusting the pH down before ultrafiltering and, in a more preferred process, thereafter diafiltering the treated composition.

### SUMMARY OF THE INVENTION

The present inventors found a method for filtering milk which provides a milk protein which advantageously can be used in medical nutritional products. The resulting milk protein product gives a relatively low viscosity enhancement when used in a nutritional product. A low viscosity is highly desired as it will increase compliance and/or consumer acceptance of the nutritional product. Furthermore, besides the good quality of protein, the present process provides a desired reduction in calcium and/or phosphorus concentration, and a reduced fouling of the ultrafiltration membranes.

The present process for filtering milk comprises the steps of:
a. adjusting the pH of milk to a value in the range of 5.9 to 6.3
b. incubating the milk obtained from step a.
c. adjusting the pH of the milk obtained from step b. to a value in the range of 6.4 to 7.0
d. subjecting the milk obtained from step c. to an ultrafiltration step.
Preferably the process is completed by obtaining or recovering the retentate.

Using this method wherein the pH is increased preferably only just before ultrafiltration, provides a milk protein concentrate with relatively low viscosity; with low calcium and/or phosphorus content, yet without fouling of the ultrafiltration membranes.

Without wishing to be bound by theory, the present inventors believe that by subjecting the milk of higher pH, which has been subjected to an incubation step at lower pH, to ultrafiltration, phosphorus salts such as calcium phosphate have not yet been reformed, resulting in an improved phosphorus and/or calcium removal and reduced fouling of the membrane. At the same time, milk protein is obtained with reduced viscosity inducing characteristics.

### DETAILED DESCIPTION OF THE INVENTION

In the present ultrafiltration (UF) process, milk proteins are concentrated by applying pressure to the milk to force water and low molecular weight components (particularly minerals and lactose) through a porous membrane filter while higher molecular components are retained (particularly protein). Material passing through the membrane is termed the permeate, and material not passing through the membrane is termed the retentate. In a preferred embodiment of the present filtration process the starting material is skim milk, more preferably skim milk originating from cows

In particular the present invention concerns a process for preparing milk protein concentrate comprising the steps of:
a. decreasing the pH of milk to a value in the range of 5.9 to 6.3;
b. incubating the milk obtained from step a. for 1 - 20 hours;
c. increasing the pH of the milk obtained from step b. to a value in the range of 6.4 to 7.0;
d. subjecting the milk obtained from step c. within 2 hours to an ultrafiltration step;
e. obtaining the retentate.

### Adjusting pH

In the present process, the pH of the milk is reduced to slightly acidic, i.e. to a pH value in the range of 5.9 to 6.3. It is important that the pH is not reduced to values of about 3 to 4. Such a low pH results in undesirable effects, particularly when processing milk on industrial scale. The pH of the solution passes the isolectric point which can lead to coagulation of proteins and undesired modification of the protein structure resulting in increased viscosity characteristics. Preferably the pH is reduced with an acid or a mixture of various acids and / or salts thereof. In one embodiment the pH is reduced with at least one acid selected from the group consisting of citric acid, malic acid, lactic acid, acetic acid, phosphoric acid, gluconic acid, glucono-delta-lactone and or hydrolchloric acid. A further drawback of the pH reduction to a low value, e.g. between 3 and 4 is that relatively large amounts of acid are needed and relatively large amounts of hydroxides or salts of weak acids need to be used to increase the pH to a value substantially within the neutral range (if desired). These processes result in protein preparations having undesirable high levels of cations and anions in the final protein concentrate.

The present pH range of 5.9 to 6.3 was found to be optimal, particularly because at a pH above about 6.3, calcium and phosphorus are not sollubilised sufficiently and at a pH below 5.9 coagulation of proteins becomes visible and at even lower pH irreversible increase of viscosity occurs.

### Incubation

In the next step the milk with reduced pH to about 5.9 to 6.3 is incubated for about 30 minutes to about 20 hours, preferably for about 1 hour to about 12 hours. The milk may be left standing or may be slightly agitated, e.g. shaken or stirred. In one embodiment incubation is carried out at room temperature. It is however preferred to avoid incubation at a temperature that would be suitable for growth of pathogenic bacteria in the milk, e.g it is preferred to avoid incubation at a temperature between 25°C and 37°C. Therefore incubation is preferably carried out at a temperature below 25°C or above 37 °C. In a preferred embodiment incubation is carried out at a a temperature at or above about 40°C, or at or above about 45°C, or at or above about 50°C or even higher at for example about 55°C or about 60°C. A temperature around about 50°C is preferred. In another preferred embodiment incubation is carried out at a temperature below room temperature, for example at or below about 20°C, or at or below about 15°C, or at or below about 10°C. A temperature at or below about 8°C is preferred. Hence the incubation step is preferentially carried out at a temperature between 1 and 10°C or between 40 and 60°C.

### Increasing pH

Following pH reduction and incubation, the pH is increased to a value in the range of 6.4 to 7.0. Preferably the pH is increased shortly before ultrafiltration. To further reduce membrane fouling the pH is preferably increased to a value in the range of 6.6 to 7.0. The milk is subsequently subjected to the ultrafiltration step, preferably within 2 hours, more preferably within 1 hour after increasing the pH. It is desirable to keep the time between increasing the pH and subjecting the milk to the ultrafiltration step short as this will result in an improved calcium and/or phosphorus removal. In one embodiment in step c. the pH is increased by adding one or more selected from the group consisting of water, sodium hydroxide, potassium hydroxide, sodium citrate, potassium citrate, sodium carbonate, potassium carbonate, sodium bicarbonate and potassium bicarbonate.

### Ultrafiltration

After increasing the pH, the milk is subjected to an ultrafiltration (UF) step. The porous membrane filter used in the present UF step preferably has a molecular weight cut-off below 100.000 Dalton, more preferably between 5.000 and 30.000 Dalton, most preferably between 15.000 and 25.000 Dalton. In combination with the present pH range, this ensures an optimal flow, optimal reduction in calcium and/or phosphorus concentration, while providing sufficient protein recovery.

As already mentioned, in the UF step, milk proteins are concentrated. Preferably, milk proteins are concentrated by the present UF to a concentration two-to six-fold of the concentration in the starting milk.

In a preferred embodiment the UF step is carried out at temperatures that limits the growth of pathogenic bacteria. Hence the UF step is preferentially carried out at a temperature between 1 and 10°C or between 40 and 60°C. In a preferred embodiment, the incubation step and the UF step are carried out at the same temperature.

In a preferred embodiment the milk used in the present process is diluted before ultrafiltration takes place. Dilution will improve the reduction in calcium, phosphorsus and/or lactose levels. Preferably the milk is diluted with 15 - 120wt.% of an aqueous solution, for example in a preferred embodiment with water, preferably tap water, before UF takes pace, wherein the wt.% is based on the total weight of the milk. Preferably the milk which is subjected to UF has a protein concentration between 1g/100ml and 3.6 g/100ml. In a preferred embodiment the dilution coincides with step c. of the present process wherein the pH is increased.

In one embodiment, the ultrafiltration step includes a diafiltration step. Diafiltration (DF) is a filtration process similar to UF. in the context of the present invention, diafiltration is considered a specific type of ultrafiltration. In a DF step water or other diluent is added to the concentrated retentate at or about the same rate that the permeate is removed. Thus, the volume of the retentate may not change much during the process of diafiltration, but the low molecular weight materials are continuously removed from the high molecular weight components in the retentate. Inclusion of a diafiltration step will improve removal of phosphorus, calcium and/or lactose.

### Subsequent processing

In one embodiment the present process further comprises one or more of the steps of pasteurisation, concentration by evaporation, spray drying and/or drum drying.

The composition obtained using the present process, the retentate, is particularly suitable for manufacture of nutritional compositions, preferably nutritional composition with a high protein content, more preferably for manufacturing compositions with between 3 and 12 gram protein per 100 ml, carbohydrates and fat. These nutritional compositions will benefit from a low viscosity due to the use of the protein concentrate manufactured by the present process.

In one embodiment, the composition obtained from the present process, in particular the retentate, is spray dried.

### Protein composition

The composition obtained from the present process, in particular the retentate, preferably contains milk protein in a concentration between 8 g/100ml and 24 g/100ml, more preferably in a concentration between 10 g/100ml and 20 g/100 ml, most preferably in a concentration between 15 g/100ml and 17 g/100 ml. The composition obtained from the present process, in particular the retentate, preferably contains less than 1.40 g phosphorus per 100g protein, more preferably between 1.00 and 1.30 g phosphorus per 100 g protein The composition obtained from the present process, in particular the retentate, preferably contains less than 2.30 g calcium per 100g protein, more preferably between 1.20 and 2.10 g calcium per 100 g protein The composition obtained from the present process, in particular the retentate, preferably contains between 5 and 15 g lactose per 100 g protein, more preferably between 10 and 13 g lactose/100 g protein.

The viscosity of the present protein composition is below the viscosity of caseinate or caseinate/whey solutions. Preferably, the viscosity of the present protein composition at a protein concentration of 16.5 g/100g is 50 to 100 mPa.s (measured at 20°C and 100s-1). As mentioned before, the present composition preferably has a protein concentration between 8 g/100ml and 24 g/100ml. In order to determine the viscosity of the present composition at 16.5 gram per liter, the present composition usually has to be diluted or concentrated. Dilution can suitably take place with water. Concentration can be suitably achieved via ultrafiltration.

### EXAMPLES

### Example 1

The pH of a batch of skim milk (at 7°C) was reduced to 6.2 by addition of a mix of citric acid and Na-citrate. The milk obtained was then incubated for one hour and heated during one hour to 50°C. Two hours after pH reduction 120% (wt/wt) tap water of 50°C was added to the milk. This caused a pH increase to about 6.4. The diluted skim milk with adjusted pH was then concentrated using a set of 20,000D ultrafiltration membranes to a protein concentration of 18 g/100g. The retentate contained 1.8g Ca / 100g protein, 1.3 g P / 100g protein and 12 g lactose / 100 g protein. When diluted to a 16.5 wt% protein concentrate, the viscosity was 60 mPa.s (measured at 20°C and a shear rate of 100s⁻¹).

### Example 2

The pH of a batch of skim milk (at 4°C) was reduced to 6.2 by addition of a mix of citric acid and Na-citrate. The milk obtained was then incubated for eight hours. Then the pH was increased to 6.4 by addition of KOH. Within 30 minutes, the milk obtained was pumped to an ultrafiltration (UF) system with membranes with pore sizes of 20,000D. Before the UF system 80wt% water was mixed with the milk in-line and the mixture was heated to 50°C. In the UF system the milk was concentrated to 16.5 wt% protein while being diafiltered with 40wt% water. Because of the addition of tap-water, the pH was increased to 6.6 during ultrafiltration and diafiltration. The protein concentrate contained 2.1 g Ca / 100g protein, 1.35 g P / 100g protein and 12 g lactose / 100 g protein. The 16.5 wt% protein concentrate had a viscosity of 70 mPa.s (measured at 20°C and a shear rate of 100s⁻¹).

## Claims

1. A process for preparing milk protein concentrate comprising the steps of:
a. decreasing the pH of milk to a value in the range of 5.9 to 6.3;
b. incubating the milk obtained from step a. for 1 - 20 hours;
c. increasing the pH of the milk obtained from step b. to a value in the range of 6.4 to 7.0;
d. subjecting the milk obtained from step c. within 2 hours to an ultrafiltration step;
e. obtaining the retentate.

2. The process according to claim 1, wherein the milk used in step a. is skim milk

3. The process according to claim 1 or 2, wherein the incubation step b. and/or the ultrafiltration step d. are carried out on milk with a temperature between 1 and 10 °C or between 40 and 60 °C.

4. The process according to any one of claims 1-3, wherein in step a. the pH is decreased with at least one acid selected from the group consisting of citric acid, malic acid, lactic acid, acetic acid, phosphoric acid, gluconic acid, glucono-delta-lactone and or hydrolchloric acid.

5. The process according to any one of claims 1-4, wherein in step c. the pH is increased by adding one or more selected from the group consisting of water, sodium hydroxide, potassium hydroxide, sodium citrate, potassium citrate, sodium carbonate, potassium carbonate, sodium bicarbonate and potassium bicarbonate.

6. The process according to any one of claims 1-5, wherein the milk is diluted with 15-120 wt% water before ultrafiltration step d.

7. The process according to any one of claims 1-6, wherein the ultrafiltration step d. comprises diafiltration.

8. The process according to any one of claims 1-7, which further comprises one or more of the steps of pasteurisation, concentration by evaporation, spray drying and/or drum drying.

9. A composition comprising
(i) milk protein in a concentration between 8 g/100ml and 24 g/100ml
(ii) phosphorus in a concentration below 1.40g phosphorus per 1 00g protein;
(iii) calcium in a concentration below 2.30 g calcium per 100g protein;
(iv) lactose in a concentration between 5 and 15 g lactose per 100 g protein; and
(v) a viscosity of 50 to 100 mPa.s at a protein concentration of 16.5 g/100ml.

10. Use of a composition obtainable by the process according to any one of claims 1-8 for the manufacture of a nutritional composition comprising between 3-12 gram protein per 100 ml.

## Patentansprüche

1. Prozess zum Herstellen eines Milcheiweißkonzentrats, folgende Schritte umfassend:
a. Senken des Milch-pH-Werts auf einen Wert im Bereich von 5,9 bis 6,3:
b. Inkubieren der aus Schritt a. erhaltenen Milch für 1 - 20 Stunden;
c. Erhöhen des pH-Werts der aus Schritt b. erhaltenen Milch auf einem Wert im Bereich von 6,4 bis 7,0;
d. innerhalb von 2 Stunden, Aussetzen der aus Schritt c. erhaltenen Milch einem Ultrafiltrierungsschritt;
e. Gewinnen des Retentats.

2. Prozess nach Anspruch 1, wobei es sich bei der im Schritt a. verwendeten Milch um Magermilch handelt.

3. Prozess nach Anspruch 1 oder 2, wobei der Inkubierungsschritt b. und/oder der Ultrafiltrierungsschritt d. an Milch mit einer Temperatur zwischen 1 und 10°C oder zwischen 40 und 60°C durchgeführt wird.

4. Prozess nach einem der Ansprüche 1 bis 3, wobei im Schritt a. der pH-Wert mit mindestens einer Säure gesenkt wird, die aus der Gruppe ausgewählt ist, die aus Zitronensäure, Apfelsäure, Milchsäure, Essigsäure, Phosphorsäure, Gluconsäure, Glucono-Delta-Lakton und/oder Salzsäure besteht.

5. Prozess nach einem der Ansprüche 1 bis 4, wobei der pH-Wert im Schritt c.
durch Zugabe eines Elements oder mehrerer Elemente erhöht wird, das/die aus der Gruppe ausgewählt ist/sind, die aus Wasser, Natriumhydroxid, Kaliumhydroxid, Natriumcitrat, Kaliumcitrat, Natriumcarbonat, Kaliumcarbonat, Natriumbicarbonat und Kaliumbicarbonat besteht.

6. Prozess nach einem der Ansprüche 1 bis 5, wobei die Milch vor dem Ultrafiltrierungsschritt d. mit 15 - 120 Gew.-% Wasser verdünnt wird.

7. Prozess nach einem der Ansprüche 1 bis 6, wobei der Ultrafiltrierungsschritt d.
eine Diafiltration umfasst.

8. Prozess nach einem der Ansprüche 1 bis 7, der darüber hinaus einen oder mehrere der Schritte Pasteurisieren, Konzentrieren durch Verdampfen, Sprühtrocknen und/oder Trommeltrocknen umfasst.

9. Zusammensetzung, Folgendes umfassend:
(i) Milcheinweiß in einer Konzentration zwischen 8 g/100 ml und 24 g/100 ml;
(ii) Phosphor in einer Konzentration von unter 1,40 g Phosphor pro 100 g Eiweiß;
(iii) Calcium in einer Konzentration von unter 2,30 g Calcium pro 100 g Eiweiß;
(iv) Lactose in einer Konzentration zwischen 5 und 15 g Lactose pro 100 g Eiweiß; und
(v) eine Viskosität von 50 bis 100 mPa.s bei einer Eiweißkonzentration von 16,5 g/100 ml.

10. Verwendung einer Zusammensetzung, die durch den Prozess nach einem der Ansprüche 1 bis 8 gewonnen werden kann, zur Herstellung einer ernährungstechnischen Zusammensetzung, die 3 bis 12 g Eiweiß pro 100 ml umfasst.

## Revendications

1. Procédé pour préparer un concentré de protéine de lait comprenant les étapes consistant à :
a. diminuer le pH du lait à une valeur dans la plage de 5,9 à 6,3 ;
b. incuber le lait obtenu dans l'étape a. pendant 1 à 20 heures ;
c. augmenter le pH du lait obtenu dans l'étape b. à une valeur dans la plage de 6,4 à 7,0 ;
d. soumettre le lait obtenu de l'étape c. dans un délai de 2 heures à une étape d'ultrafiltration ;
e. obtenir le rétentat.

2. Procédé selon la revendication 1, dans lequel le lait utilisé dans l'étape a. est du lait écrémé.

3. Procédé selon la revendication 1 ou 2, dans lequel l'étape d'incubation b. et/ou l'étape d'ultrafiltration d. sont conduites sur du lait à une température entre 1 et 10 °C ou entre 40 et 60 °C.

4. Procédé selon l'une quelconque des revendications 1 à 3, dans lequel, dans l'étape a., le pH est diminué avec au moins un acide choisi dans le groupe constitué de l'acide citrique, l'acide malique, l'acide lactique, l'acide acétique, l'acide phosphorique, l'acide gluconique, la glucono-delta-lactone et ou l'acide chlorhydrique.

5. Procédé selon l'une quelconque des revendications 1 à 4, dans lequel, dans l'étape c., le pH est augmenté en ajoutant l'un ou plusieurs choisis dans le groupe constitué de l'eau, l'hydroxyde de sodium, l'hydroxyde de potassium, le citrate de sodium, le citrate de potassium, le carbonate de sodium, le carbonate de potassium, le bicarbonate de sodium et le bicarbonate de potassium.

6. Procédé selon l'une quelconque des revendications 1 à 5, dans lequel le lait est dilué avec 15 à 120 % en poids d'eau avant l'étape d'ultrafiltration d.

7. Procédé selon l'une quelconque des revendications 1 à 6, dans lequel l'étape d'ultrafiltration d. comprend une diafiltration.

8. Procédé selon l'une quelconque des revendications 1 à 7, qui comprend en outre une ou plusieurs des étapes de pasteurisation, concentration par évaporation, séchage par pulvérisation et/ou séchage au tambour.

9. Composition comprenant
(i) de la protéine de lait à une concentration comprise entre 8 g/100 ml et 24 g/100 ml
(ii) du phosphore à une concentration inférieure à 1,40 g de phosphore pour 100 g de protéine ;
(iii) du calcium à une concentration inférieure à 2,30 g de calcium pour 100 g de protéine ;
(iv) du lactose à une concentration comprise entre 5 et 15 g de lactose pour 100 g de protéine ; et
(v) une viscosité de 50 à 100 mPa.s à une concentration de protéine de 16,5 g/100 ml.

10. Utilisation d'une composition pouvant être obtenue par le procédé selon l'une quelconque des revendications 1 à 8 pour la fabrication d'une composition nutritionnelle comprenant entre 3 et 12 grammes de protéine pour 100 ml.
